# EUROPEAN PATENT SPECIFICATION

(11) **EP 3 901 306 B1**
(45) Date of publication and mention of the grant of the patent: **04.10.2023**
(21) Application number: 19898698.6
(22) Date of filing: 13.12.2019
(51) Int. Cl.: C22C 38/04, C22C 38/02, C22C 38/00, C21D 8/02, C21D 1/19, C22C 38/06, C21D 9/46, C21D 1/02, C22C 38/08, C22C 38/12, C22C 38/14, C22C 38/16, C22C 38/18, C21D 1/20, C21D 1/22, B21B 37/74, B21B 3/00

(54) **STRUCTURAL STEEL HAVING EXCELLENT BRITTLE FRACTURE RESISTANCE AND METHOD FOR MANUFACTURING SAME**
BAUSTAHL MIT AUSGEZEICHNETER SPRÖDBRUCHFESTIGKEIT UND VERFAHREN ZU SEINER HERSTELLUNG
ACIER DE CONSTRUCTION AYANT UNE EXCELLENTE RÉSISTANCE À LA RUPTURE FRAGILE ET SON PROCÉDÉ DE FABRICATION

(30) Priority: 19.12.2018 KR 20180165147
(43) Date of publication of application: 27.10.2021
(73) Proprietor: POSCO Co., Ltd, Pohang-si, Gyeongsangbuk-do 37859 (KR)
(72) Inventor: YI, Il-Cheol, Gwangyang-si, Jeollanam-do 57807 (KR); CHO, Jae-Young, Gwangyang-si, Jeollanam-do 57807 (KR); KANG, Sang-Deok, Gwangyang-si, Jeollanam-do 57807 (KR)
(74) Representative: Meissner Bolte Partnerschaft mbB
(86) International application number: PCT/KR2019/017728
(87) International publication number: WO 2020/130515

(56) References cited:
- EP-A1- 2 441 854
- EP-A1- 2 949 772
- WO-A1-2018/030737
- JP-A- 2002 020 835
- JP-B2- H 064 903
- KR-A- 20150 122 779
- KR-B1- 100 833 076
- KR-B1- 100 833 076
- KR-B1- 101 819 356
- KR-B1- 960 009 174

## Description

### [Technical Field]

The present invention relates to a structural steel and a method for manufacturing the same, and more particularly, to a structural steel and a method for manufacturing the same, which effectively improves brittle fracture resistance by optimizing a steel composition, a microstructure and a manufacturing process.

### [Background Art]

In line with the recent trend of increasing the size of building structures, steel pipes for transportation, bridges, etc., demand for the development of structural steels having high strength characteristics has increased. In the past, steels were produced by applying a heat treatment method such as quenching-tempering to satisfy such high-strength characteristics, but recently, in terms of reducing production costs and securing weldability, steel produced by cooling after rolling has replaced the existing heat-treated steel. In the case of steel produced by cooling after rolling, impact toughness is improved due to a fine microstructure, but a microstructure having high strength such as bainite or martensite may be formed in a thickness direction from a surface layer portion of the steel due to excessive cooling and brittle fractures may easily occur by a hard phase thereof.

The Naval Research Lab. (NRL) drop weight test is a typical method for measuring resistance to brittle fracture. The NRL drop weight test is a testing method developed in 1953 by NRL, the US Naval Research Institute, to examine brittle fracture arrestability, which has been standardized in ASTME208. In this test, a short brittle bead for occurrence of cracks is formed in a central portion of a surface of a steel sheet having a size of 52×140mm or 90×360mm, and a test piece obtained by machining a notch at a central portion of the brittle bead, and testing is performed thereon. The test piece is cooled at several temperatures, and thereafter, both ends of the test piece are supported with the brittle bead facing downward, and a heavy weight is dropped from the opposite side to cause cracks from a front end of a notch. A nil ductility transition temperature (NDT), which is the highest temperature at which cracks propagate in a thickness direction of the test piece and the test piece is fractured, is obtained and compared with a limit temperature at which brittle fracture occurs, so as to be evaluated. That is, a steel having a lower NDT temperature may be evaluated to have excellent brittle fracture resistance.

Recently, in order to secure stability of large structures, the trend requires steels provided as materials of large structures to have excellent brittle fracture resistance, and steels having an NDT temperature satisfying a level of -70°C or lower are evaluated to have brittle fracture resistance particularly suitable for large structures.

Therefore, it is urgent to develop a steel manufactured by cooling after rolling and having excellent NDT temperature characteristics to have excellent brittle fracture resistance, while effectively securing economical efficiency and weldability.

Patent document 1 proposes a technology for granularizing a surface layer portion of a steel, but the surface layer portion is mainly formed of equiaxed ferrite grains and elongated ferrite grains, and thus, the technology cannot be applied to high-strength steels having a tensile strength of 800 MPa or higher. In addition, in Patent document 1, in order to grain-refine the surface layer portion, a rolling process has to be essentially performed in the middle of recuperating heat in the surface layer portion, which makes it difficult to control the rolling process.

Patent document 2 describes a hot-rolled steel sheet comprising a composition that contains, on a mass percent basis: 0.04% or more and 0.15% or less of C, 0.01% or more and 0.55% or less of Si, 1.0% or more and 3.0% or less of Mn, 0.03% or less P, 0.01% or less S, 0.003% or more and 0.1% or less of Al, 0.006% or less N, 0.035% or more and 0.1% or less Nb, 0.001% or more and 0.1% or less of V, 0.001% or more and 0.1% or less Ti, and the balance being Fe and incidental impurities, wherein the hot-rolled steel sheet comprises a microstructure in which the proportion of precipitated Nb to the total amount of Nb is 35% or more and 80% or less, the volume fraction of tempered martensite and/or tempered bainite having a lath interval of 0.2 µm or more and 1.6 µm or less is 95% or more at a position 1.0 mm from a surface the sheet in the thickness direction, and the volume fraction of ferrite having a lath interval of 0.2 µm or more and 1.6 µm or less at the center position of the sheet in the thickness direction is 95% or more.

Patent document 3 teaches a high strength steel that satisfies low temperature toughness, brittle crack arrest properties, and low yield ratio by properly controlling a composition for the steel and differently controlling surface structure and internal structure of the steel is provided, and a manufacturing method of the high strength steel. A manufacturing method of a high strength and low yield ratio steel for structure having excellent low temperature toughness and brittle crack arrest properties comprises the steps of: rough rolling the reheated steel slab at a temperature of 1250 to 1000 deg.C after reheating a steel slab comprising, by weight percent, 0.03 to 0.12% of C, 0.01 to 0.8% of Si, 0.3 to 2.5% of Mn, 0.02% or less of P, 0.01% or less of S, 0.005 to 0.5% of Al, 0.005 to 0.1% of Nb, 3 to 50 ppm of B, 0.005 to 0.1% of Ti, 15 to 150 ppm of N, and the balance of Fe and inevitable impurities; cooling the rough rolled slab to not higher than the bainite transformation starting temperature in a cooling rate of at least 1 deg.C/sec and recurring the cooled slab; finish rolling the recurred slab at a total rolling reduction of at least 30% to manufacture the slab into a steel sheet; and air-cooling or water-cooling the steel sheet. The cooling after the rough rolling is performed to not higher than a temperature at which a surface of the steel sheet has at least 50% of bainite occupancy rate. The steel further comprises one or more selected from the group consisting of 0.05 to 1.0% of Cr, 0.01 to 1.0% of Mo, 0.01 to 2.0% of Ni, 0.01 to 1.0% of Cu, and 0.005 to 0.3% of V.

### (Related art documents)

(Patent document 1) JP 2002 - 20 835 A
(Patent document 2) EP 2 949 772 A1
(Patent document 3) KR 10 0 833 076 B1

### [Invention]

### [Technical Problem]

The present invention provides a structural steel having excellent brittle fracture resistance and a method for manufacturing the same.

The technical problem of the present invention is not limited to the above description. Those skilled in the art will have no difficulty in understanding an additional technical problem of the present invention from the general contents of the present invention.

### [Technical Solution]

The solution is described in the appended claims.

All of the features of the present invention are not listed as means for solving the above problems, and various features of the present invention and advantages and effects thereof will be understood in more detail with reference to the specific embodiments below.

### [Advantageous Effects]

According to an aspect of the present invention, a structural steel having excellent brittle fracture resistance, having an NDT temperature of -70°C or lower by an NRL drop weight test, while having high strength characteristics, and a method for manufacturing the same are provided.

### [Description of Drawings]

FIG. 1 is a photograph of a cross section of a steel specimen according to an embodiment of the present invention.
FIG. 2 is a photograph of observing a microstructure of an upper surface layer portion A and a central portion B of the specimen of FIG. 1.
FIG. 3 is a diagram schematically illustrating an example of equipment for implementing a manufacturing method of the present invention.
FIG. 4 is a conceptual diagram schematically illustrating a change in a microstructure of a surface layer portion by a heat recuperation treatment of the present invention.
FIG. 5 is a graph illustrating an experimentally measured relationship between a heat recuperation arrival temperature and an NDT temperature.

### [Best Mode for Invention]

The present invention relates to a structural steel having excellent brittle fracture resistance and a method for manufacturing the same, and hereinafter, embodiments of the present invention will be described. The embodiments of the present invention may be modified in various forms, and the scope of the present invention should not be construed as being limited to the embodiments described below. The present embodiments are provided to those skilled in the art to which the present invention pertains to further specify the present invention.

Hereinafter, a steel composition of the present invention will be described in more detail. Hereinafter, unless otherwise indicated, % and ppm representing the content of each element are based on weight.

A structural steel having excellent brittle fracture resistance according to the present invention includes, by wt%, 0.02% to 0.12% of carbon (C), 0.01% to 0.8% of silicon (Si), 1.5% to 2.5% of manganese (Mn), 0.005% to 0.5% of aluminum (Al) , 0.02% or less of phosphorus (P), 0.01% or less of sulfur (S), 0.0015% to 0.015% of nitrogen (N), and the balance of Fe and other inevitable impurities. In addition, the structural steel having excellent brittle fracture resistance according to an aspect of the present invention further includes, by wt%, 0.01% to 2.0% of nickel (Ni), 0.01% to 1.0% of copper (Cu), 0.01% to 1.0% of chromium (Cr), 0.01% to 1.0% of molybdenum, 0.005% to 0.1% of titanium (Ti), 0.005% to 0.1% of niobium (Nb),0.005% to 0.3% of vanadium (V), 0.0005% to 0.004% of boron (B), and 0.006% or less of calcium (Ca).

### Carbon (C): 0.02% to 0.12%

Carbon (C) is an important element to ensure hardenability in the present invention. In addition, carbon (C) is also an element significantly affecting formation of a bainitic ferrite structure in the present invention. Accordingly, carbon (C) needs to be included in the steel within an appropriate range in order to achieve such an effect, and in the present invention, a lower limit of a carbon (C) content is limited to 0.02%. The carbon (C) content may preferably be 0.03% or more and more preferably 0.04% or more. However, if the carbon (C) content exceeds a certain range, low-temperature toughness of the steel may decrease, and thus, in the present invention, an upper limit of the carbon content is limited to 0.12%. Accordingly, the carbon (C) content of the present invention is 0.02% to 0.12%. The carbon (C) content may preferably be 0.11% or less and more preferably 0.10% or less. In addition, in the case of a steel provided for a welding structure, it is more preferable to limit the range of the carbon (C) content to 0.03% to 0.08% in terms of securing weldability.

### Silicon (Si): 0.01% to 0.8%

Silicon (Si) is an element used as a deoxidizer and is an element contributing to improving strength toughness. Accordingly, in order to obtain this effect, in the present invention, a lower limit of a silicon (Si) content is limited to 0.01%. The silicon (Si) content may preferably be 0.05% or more and more preferably 0.1% or more. However, an excessive addition of silicon (Si) may deteriorate low-temperature toughness and weldability, and thus, in the present invention, an upper limit of the silicon content is limited to 0.8%. The silicon (Si) content may preferably be 0.7% or less and more preferably 0.6% or less.

### Manganese (Mn): 1.5% to 2.5%

Manganese (Mn) is an element useful for improving strength by solid solution strengthening and is also an element economically increasing hardenability. Accordingly, in order to obtain such an effect, in the present invention, a lower limit of a manganese (Mn) content is limited to 1.5%. A manganese (Mn) content may preferably be 1.6% or more and more preferably 1.7% or more. However, an excessive addition of manganese (Mn) may significantly deteriorate toughness of a welded portion due to an excessive increase in hardenability, and thus, in the present invention, an upper limit of the manganese (Mn) content is limited to 2.5%. The manganese (Mn) content may preferably be 2.45% or less and more preferably 2.4% or less.

### Aluminum (Al): 0.005% to 0.5%

Aluminum (Al) is a typical deoxidizing agent economically deoxidizing molten steel and is also an element contributing to improving strength of steel. Thus, in order to achieve such an effect, in the present invention, a lower limit of an aluminum (Al) content is limited to 0.005%. The aluminum (Al) content may preferably be 0.008% or more and more preferably 0.01% or more. However, an excessive addition of aluminum (Al) may cause clogging of a nozzle during continuous casting, and thus, in the present invention, an upper limit of the aluminum (Al) content is limited to 0.5%. The aluminum (Al) content may preferably be 0.4% or less and more preferably 0.3% or less.

### Phosphorus (P): 0.02% or less

Phosphorus (P) is an element contributing to improving strength and corrosion resistance, but it is preferable to maintain its content as low as possible because phosphorus (P) may significantly impair impact toughness. Therefore, a phosphorus (P) content of the present invention is 0.02% or less.

### Sulfur (S): 0.01% or less

Sulfur (S) is an element forming a non-metallic inclusion such as MnS to significantly inhibit impact toughness, so it is preferable to maintain its content as low as possible. Therefore, in the present invention, an upper limit of a sulfur (S) content is limited to 0.01%. However, sulfur (S) is an impurity unavoidably introduced during a steelmaking process and it is not desirable to control sulfur (S) to a level lower than 0.001% in economic terms, and thus, the sulfur (S) content of the present invention may preferably be 0.001 to 0.01%.

### Nitrogen (N): 0.0015% to 0.015%

Nitrogen (N) is an element contributing to improving of strength of a steel. However, an excessive addition thereof may significantly deteriorate toughness of the steel, and thus, in the present invention, an upper limit of a nitrogen (N) content is limited to 0.015%. However, nitrogen (N) is an impurity unavoidably introduced during a steelmaking process and it is not desirable to control the nitrogen (N) content to a level less than 0.0015% in economic terms, and the nitrogen (N) content is 0.0015% to 0.015%.

### Nickel (Ni): 0.01% to 2.0%

Nickel (Ni) is almost the only element able to improve both strength and toughness of a base metal, and in order to achieve such an effect, in the present invention, 0.01% or more of nickel (Ni) is added. A nickel (Ni) content may preferably be 0.05% or more and more preferably 0.1% or more. However, nickel (Ni) is an expensive element, and thus, an excessive addition thereof is not desirable in terms of economic efficiency, and in addition, an excessive addition thereof may deteriorate weldability, and thus, in the present invention, an upper limit of the nickel (Ni) content is limited to 2.0%. The nickel (Ni) content may be preferably 1.5% or less and more preferably 1.0% or less.

### Copper (Cu): 0.01% to 1.0%

Copper (Cu) is an element contributing to improving strength, while minimizing a decrease in toughness of a base metal. Therefore, in order to achieve such an effect, in the present invention, 0.01% or more of copper (Cu) is added. A copper (Cu) content may be preferably 0.015% or more and more preferably 0.02% or more. However, an excessive addition of copper (Cu) may impair quality of a surface of a final product, and thus, in the present invention, an upper limit of the copper (Cu) content is limited to 1.0%. The copper (Cu) content may preferably be 0.8% or less and more preferably 0.6% or less.

### Chrome (Cr): 0.01% to 1.0%

Since chromium (Cr) is an element increasing hardenability to effectively contribute to an increase in strength, and thus, in the present invention, 0.01% or more of chromium (Cr) is added. A chromium (Cr) content may preferably be 0.05% or more and more preferably 0.1% or more. However, an excess of the content of chromium (Cr) may significantly deteriorate weldability, and thus, in the present invention, an upper limit of the content of chromium (Cr) is limited to 1.0%. The chromium (Cr) content may preferably be 0.8% or less and more preferably 0.6% or less.

### Molybdenum (Mo): 0.01% to 1.0%

Molybdenum (Mo) is an element significantly improving hardenability with only a small amount of addition. Molybdenum (Mo) may suppress an occurrence of ferrite, thereby significantly improving strength of a steel. Therefore, in order to achieve such an effect, in the present invention, 0.01% or more of molybdenum (Mo) is added. A molybdenum (Mo) content may preferably be 0.03% or more and more preferably 0.05% or more. However, an excess of the content of molybdenum (Mo) may excessively increase hardness of a welding portion, and thus, in the present invention, an upper limit of the molybdenum (Mo) content is limited to 1.0%. The molybdenum (Mo) content may preferably be 0.8% or less and more preferably 0.6% or less.

### Titanium (Ti): 0.005% to 0.1%

Titanium (Ti) is an element suppressing growth of grains during reheating to significantly improve low-temperature toughness. Therefore, in order to achieve such an effect, in the present invention, 0.005% or more of titanium (Ti) is added. A titanium (Ti) content may preferably be 0.007% or more and more preferably 0.01% or more. However, an excessive addition of titanium (Ti) may cause problems such as clogging of a nozzle or reduction in low-temperature toughness due to crystallization in the central portion, and thus, in the present invention, an upper limit of the titanium (Ti) content is limited to 0.1%. The titanium (Ti) content may preferably be 0.08% or less and more preferably 0.05% or less.

### Niobium (Nb): 0.005% to 0.1%

Niobium (Nb) is one of the elements playing an important role in the manufacturing of TMCP steel and is also an element deposited in the form of carbides or nitrides to significantly contribute to improving strength of a base metal and a welded portion. In addition, niobium (Nb) dissolved during reheating of a slab inhibits recrystallization of austenite and inhibits transformation of ferrite and bainite, thereby refining a structure. In the present invention, 0.005% or more of niobium (Nb) is added. A niobium (Nb) content may preferably be 0.01% or more and more preferably 0.02% or more. However, an excess of the content of niobium (Nb) may form coarse precipitates to cause brittle cracks at the edges of the steel, and thus, an upper limit of the niobium (Nb) content is limited to 0.1%. The niobium (Nb) content may preferably be 0.09% or less and more preferably 0.07% or less.

### Vanadium (V): 0.005% to 0.3%

Vanadium (V) has a low solution temperature compared to other alloy compositions and is precipitated at a welding heat affecting portion to prevent lowering of strength of a welded portion. Thus, in order to achieve such an effect, in the present invention, a vanadium (V) content may preferably be 0.01% or more and more preferably 0.02% or more. However, an excessive addition of vanadium (V) may reduce toughness of the steel, and thus, in the present invention, an upper limit of the vanadium (V) content is limited to 0.3%. The vanadium (V) content may preferably be 0.2% or less and more preferably 0.1% or less.

### Boron (B): 0.0005% to 0.004%

Boron (B) is an inexpensive additional element but is also a beneficial element that may effectively increase hardenability even with a small amount of addition. In addition, since boron (B) in the present invention is an element significantly contributing to formation of bainite even under low-speed cooling conditions during cooling after rough rolling, 0.0005% or more of boron (B) is added for such an effect. A boron (B) content may preferably be 0.0007% or more and more preferably 0.001% or more. However, an excessive addition of boron (B) may form Fe₂₃(CB)₆ to rather lower hardenability and significantly lower low-temperature toughness, and thus, in the present invention, an upper limit of the boron (B) content is limited to 0.004%.

### Calcium (Ca): 0.006% or less

Calcium (Ca) is an element controlling a shape of a non-metallic inclusion, such as MnS or the like and improves low-temperature toughness, and thus, in the present invention, calcium (Ca) is added for this effect. However, an excessive addition of calcium (Ca) may cause formation of a large amount of CaO-CaS and formation of coarse inclusions due to bonding, which may lower cleanliness of the steel and weldability in the field. Therefore, in the present invention, an upper limit of the calcium (Ca) content is limited to 0.006%.

In the present invention, the balance other than the steel composition described above is Fe and inevitable impurities. The inevitable impurities, which may be unintentionally mixed in a general steel manufacturing process, cannot be completely excluded, which may be easily understood by those skilled in the general steel manufacturing field. In addition, in the present invention, an addition of compositions other than the steel compositions mentioned above is not entirely excluded.

The structural steel having excellent brittle fracture resistance according to an aspect of the present invention is not particularly limited in thickness and may preferably be a thick structural steel having a thickness of 100 mm or more and more preferably be a thick structural steel having a thickness of 20 mm to 100 mm.

Hereinafter, a microstructure of the present invention will be described in more detail.

A structural steel of the present invention is divided into surface layer portions adjacent to surfaces of the steel and a central portion located between surface layer portions microstructurally distinguished from each other in a thickness direction of the steel. The surface layer portion is divided into an upper surface portion adjacent to an upper portion of the steel and a lower surface layer portion adjacent to a lower portion of the steel, and the upper surface layer portion and the lower surface layer portion have a thickness of about 3% to 10% of a thickness t of the steel.

The surface layer portion includes tempered bainite as a matrix structure includes fresh martensite and austenite as a second structure and a residual structure, respectively. A fraction occupied by tempered bainite and fresh martensite in the surface layer portion is 95 area% or more, and a fraction occupied by the austenite structure in the surface layer portion is 5 area% or less. A fraction occupied by the austenite structure in the surface layer portion may be 0 area%.

The central portion includes bainitic ferrite as a matrix structure, and a fraction occupied by bainitic ferrite in the central portion is 95 area% or more. In terms of securing desired strength, a more preferable fraction of bainitic ferrite may be 98 area% or more.

An average grain size of the microstructure of the surface layer portion is 3 µm or less, excluding 0 µm, and an average grain size of the microstructure of the central portion may be 5 to 20 um. Here, the average grain size of the microstructure of the surface layer portion refers to a case in which an average grain size of each of tempered bainite, fresh martensite, and austenite is 3 µm or less, excluding 0 um, and the average grain size of the microstructure of the central portion may refer to a case in which an average grain size of bainitic ferrite is 5 to 20 um. More preferably, an average grain size of the microstructure of the central portion may be 10 to 20 um.

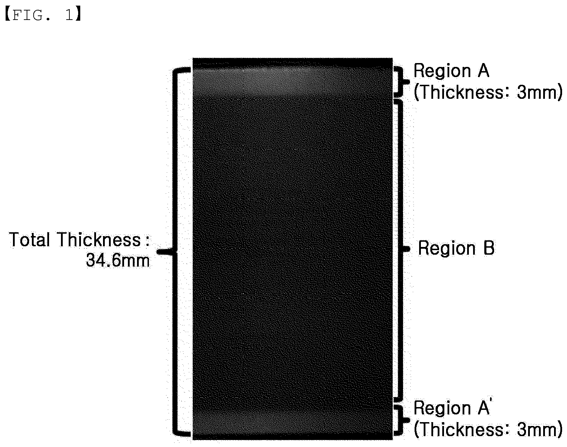

FIG. 1 is a photograph of a cross-section of a steel specimen according to an embodiment of the present invention. As shown in FIG. 1, the steel specimen according to an embodiment of the present invention is divided into upper and lower surface layer portions A and A' adjacent to upper and lower surfaces and a central portion B between the upper and lower surface layer portions A and A', and boundaries between the upper and lower surface layer portions A and A' and the central portion B are apparent to be visible with naked eyes. That is, it can be seen that the upper and lower surface layer portions A and A' and the central portion B of the steel according to an embodiment of the present invention are apparently distinguished from each other microstructurally.

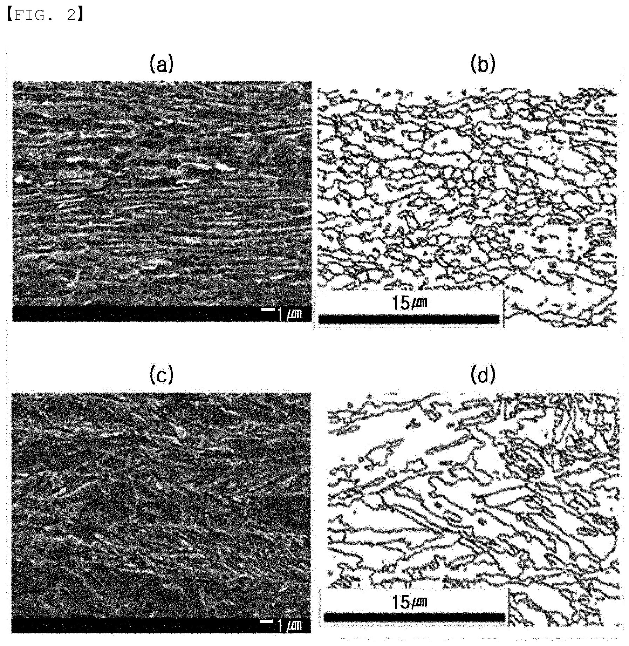

FIG. 2 is a photograph of observing microstructures of the upper surface layer portion A and the central portion B of the specimen of FIG. 1. (a) and (b) of FIG. 2 show an image of the upper surface layer portion A of the specimen observed by a scanning electron microscope (SEM) and an image of high angle grain boundary map of the upper surface layer portion A of the specimen captured using an electron back scattering diffraction (EBSD) method, and (c) and (d) of FIG. 2 show an image of the central portion B of the specimen observed by an SEM and an image of high angle grain boundary map of the central portion B of the specimen captured using the EBSD. As shown in (a) to (d) of FIG. 2, it can be seen that the upper surface layer portion A includes tempered bainite and fresh martensite having an average grain size of about 3 µm or less, while the central portion B includes bainitic ferrite having an average grain size of about 15 um.

Since the structural steel having excellent brittle fracture resistance according to an aspect of the present invention has the surface layer portions and the central portion distinguished from each other microstructurally and the central portion includes bainitic ferrite as a matrix structure, high-strength properties with a tensile strength exceeding 780 MPa, preferably, tensile strength of 800 MPa or more may be effectively secured.

In addition, since the structural steel having excellent brittle fracture resistance according to an aspect of the present invention has the surface layer portions and the central portion distinguished from each other microstructurally and the relatively fine-grained surface layer portions include tempered bainite as a matrix structure and fresh martensite as a second structure and secure 45% or more of high angle grain boundary fraction, an NDT temperature of -70°C or lower is secured. Therefore, since the steel of the present invention effectively inhibits an occurrence and progress of brittle cracks by the fine-grained surface layer portions, brittle fracture resistance may be effectively secured.

Hereinafter, a manufacturing method of the present invention will be described in more detail.

### Slab reheating

Since a slab provided in the manufacturing method of the present invention has a steel composition corresponding to the steel composition of the steel described above, a description of the steel composition of the slab is replaced with the description of the steel composition of the steel described above.

The slab manufactured with the steel composition described above is reheated in a temperature range of 1050°C to 1250°C. In order to sufficiently solidify carbonitrides of Ti and Nb formed during casting, a lower limit of the reheating temperature of the slab is limited to 1050°C. However, if the reheating temperature is excessively high, austenite may become coarse and an excessive time may be required for a temperature of a surface layer portion of a rough-rolled bar to reach a first cooling start temperature after rough rolling, and thus, an upper limit of the reheating temperature is limited to 1250°C.

### Rough rolling

Rough rolling is performed after reheating in order to adjust a shape of the slab and destroy a casting structure such as dendrite. To control the microstructure, it is desirable to perform rough rolling at a temperature higher than a temperature at which recrystallization of austenite stops (Tnr, °C), and an upper limit of a temperature for rough rolling is limited to 1150°C in consideration of the cooling start temperature of the first cooling. Therefore, the temperature for rough rolling of the present invention ranges from Tnr to 1150°C. In addition, rough rolling of the present invention may be carried out under conditions of a cumulative reduction ratio of 20% to 70%.

### First cooling

After rough rolling is finished, first cooling is performed on the surface layer portion of the rough-rolled bar. The cooling rate of the first cooling is 5°C/s or higher, and the cooling arrival temperature of the first cooling is within a temperature range of Ms to Bs°C. If the cooling rate of the first cooling is less than a certain level, a polygonal ferrite or granular bainite structure, rather than a lath bainite structure, may be formed on the surface layer portion, and thus, the cooling rate of first cooling is limited to 5°C/s or higher. In addition, a cooling method of the first cooling is not particularly limited, but water cooling is more preferable in terms of cooling efficiency. Meanwhile, if the cooling start temperature of the first cooling is too high, a lath bainite structure formed on the surface layer portion by the first cooling may become coarse, and thus, the start temperature of the first cooling is limited to a range of Ae3 + 100°C or less.

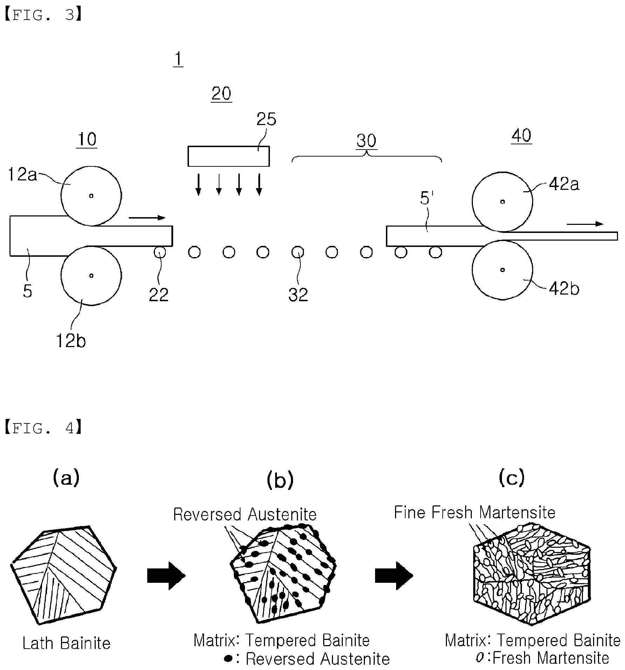

In order to maximize the effect of heat recuperation, the first cooling of the present invention is preferably carried out immediately after rough rolling. FIG. 3 is a diagram schematically illustrating an example of a facility 1 for implementing the manufacturing method of the present invention. Along a movement path of a slab 5, a rough rolling device 10, a cooling device 20, a heat recuperator 30, and a finish rolling device 40 are sequentially arranged, and the rough rolling device 10 and the finish rolling device 40 include rough rolling rollers 12a and 12b and finish rolling rollers 42a and 42b, respectively, to perform rolling of the slab 5 and a rough rolled bar 5'. The cooling device 20 includes a bar cooler 25 capable of spraying cooling water and an auxiliary roller 22 guiding movement of the rough rolled bar 5'. It is more preferable in terms of maximizing the heat recuperation effect that the bar cooler 25 is disposed directly behind the rough rolling device 10. The heat recuperator 30 is disposed behind the cooling device 20, and the rough rolled bar 5' is recuperated, while moving along the auxiliary roller 32. The recuperation-finished rough rolled bar 5' is moved to the finish rolling device 40 to be finish-rolled. In the above, a facility for manufacturing a high-strength structural steel having excellent brittle fracture resistance according to an aspect of the present invention has been described based on FIG. 3, but such facility 1 is an example of a facility for carrying out the present invention and the present invention should not necessarily be construed as being manufactured by the facility 1 shown in FIG. 3.

### Heat recuperation treatment

After performing the first cooling, a heat recuperation treatment is performed to maintain the surface layer portion side of the rough rolled bar to be reheated by high heat at the central portion side of the rough rolled bar. The heat recuperation treatment is carried out until a temperature of the surface layer portion of the rough rolled bar reaches a temperature range of (Ac1₊40°C) ~ (Ac3-5°C). By the heat recuperation treatment, lath bainite in the surface layer portion may be transformed into fine tempered bainite, and a portion of the lath bainite in the surface layer portion may be reversely transformed into austenite. A portion of the reversely transformed austenite may be transformed into fresh martensite through subsequent finish rolling and second cooling.

FIG. 4 is a conceptual diagram schematically illustrating a change in a microstructure of a surface layer portion by heat recuperation treatment of the present invention.

As shown in (a) of FIG. 4, the microstructure of the surface layer portion immediately after the first cooling includes a lath bainite structure. As shown in (b) of FIG. 4, as the heat recuperation treatment proceeds, the lath bainite of the surface layer portion is transformed into a tempered bainite structure, and a portion of the lath bainite in the surface layer portion may be reversely transformed into austenite. After the heat recuperation treatment, finish rolling and second cooling may be performed and a two-phase mixed structure including tempered bainite and fresh martensite may be formed and austenite structure may partially remain as shown in (c) of FIG. 4.

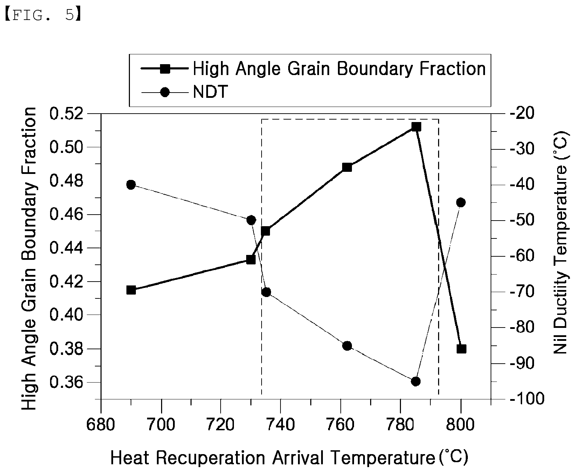

FIG. 5 is a graph illustrating a experimentally measured relationship among a heat recuperation treatment arrival temperature, a high angle grain boundary fraction of the surface layer portion and an NDT temperature. In the test of FIG. 5, a specimen was manufactured under conditions that satisfy the alloy composition and manufacturing method of the present invention and testing was conducted by varying the heat recuperation treatment arrival temperature in a heat recuperation treatment. Here, a fraction of high angle grain boundary having an orientation difference of 15 degrees or more was measured and evaluated using an EBSD method, and an NDT temperature was measured by an NRL drop weight test described above. As shown in FIG. 5, it can be seen that, when an arrival temperature of the surface layer portion is lower than (Ac1+40°C), high angle grain boundaries of 15°C or more were not sufficiently formed and the NDT temperature exceeded -70°C. In addition, when the arrival temperature of the surface layer portion exceeded (Ac3-5°C), the high angle grain boundaries of 15°C or more were not sufficiently formed and the NDT temperature exceeded -70°C. Therefore, in the present invention, the arrival temperature of the surface layer portion during the heat recuperation treatment is limited to a temperature range of (Ac1 +40°C)~(Ac3-5°C)), whereby the surface layer structure is refined, 45% or more of high angle grain boundary fraction of 15°C or more may be secured, and the NDT temperature of -70°C or lower can be effectively secured.

### Finish rolling

Finish rolling is performed to introduce a nonuniform microstructure into the austenite structure of the rough rolled bar. Finish rolling may be performed in a temperature range equal to or higher than a bainite transformation start temperature (Bs) and lower than an austenite recrystallization temperature (Tnr).

### Second cooling

After finishing the finish rolling, second cooling is performed to form bainitic ferrite in the center of the steel. A cooling rate of the second cooling is 5°C/s or more, and a cooling arrival temperature of the second cooling is 500°C or lower. In addition, if the second cooling arrival temperature is too low, the formation of bainitic ferrite may not increase any more, while time and cost required for cooling may excessively increase, and an equipment load may occur due to distortion of a plate shape or the like. Therefore, in the present invention, the second cooling arrival temperature is limited to 200°C or higher. A cooling method of the second cooling is also not particularly limited, but water cooling may be preferable in terms of cooling efficiency. If the cooling arrival temperature of the second cooling exceeds a certain range or the cooling rate does not reach a certain level, granular ferrite may be formed in the center of the steel, thereby causing a decrease in strength, and thus, in the present invention, the cooling arrival temperature of the second cooling is limited to 500°C or lower and 200 °C or higher, and the cooling rate is limited to 5°C/s or more.

### (DESCRIPTION OF REFERENCE NUMERALS)

1: STEEL MANUFACTURING FACILITY
10: ROUGH ROLLING DEVICE
12A,B: ROUGH ROLLING ROLLER
20: COOLING DEVICE
22: AUXILIARY ROLLER
25: BAR COOLER
30: HEAT RECUPERATOR
32: AUXILIARY ROLLER
40: FINISH ROLLING DEVICE
42A,B: FINISH ROLLING ROLLER
100: COLD ROLLED BENDING FIXTURE
110: STEEL

### [Mode for Invention]

Hereinafter, the present invention will be described in more detail through specific examples.

### (Example)

Slabs having the steel compositions of Table 1 were prepared, and transformation temperatures were calculated based on the steel compositions of Table 1 and shown in Table 2. In Table 1 below, the content of boron (B), nitrogen (N) and calcium (Ca) is based on ppm. The listed Examples are not within the scope of the Invention, since not all features of the independent claims are disclosed.

**[Table 1]**

| St ee 1 gr ad e | Alloy composition (wt%) | | | | | | | | | | | | | | | |
|---|---|---|---|---|---|---|---|---|---|---|---|---|---|---|---|---|
| | C | Si | Mn | P | S | Al | Ni | Cu | Cr | Mo | Ti | Nb | V | B* | N* | Ca* |
| A | 0.05 | 0.1 5 | 2.2 4 | 0.01 3 | 0.00 2 | 0.0 15 | 0.4 | 0.2 6 | 0.3 5 | 0.1 6 | 0.0 16 | 0.0 4 | 0.0 4 | 12 | 40 | 12 |
| B | 0.04 4 | 0.3 5 | 1.9 5 | 0.01 3 | 0.00 5 | 0.0 32 | 0.8 | 0 | 0 | 0.3 5 | 0.0 13 | 0.0 4 | 0 | 15 | 54 | 27 |
| C | 0.04 7 | 0.3 | 2.1 5 | 0.01 2 | 0.00 2 | 0.0 23 | 0.33 | 0.1 7 | 0 | 0 | 0.0 15 | 0.0 4 | 0 | 40 | 45 | 18 |
| D | 0.09 | 0.4 5 | 2.1 | 0.01 3 | 0.00 3 | 0.0 35 | 0.43 | 0 | 0.4 6 | 0 | 0.0 19 | 0.0 4 | 0 | 8 | 41 | 28 |
| E | 0.07 | 0.2 5 | 2.3 | 0.01 3 | 0.00 2 | 0.0 3 | 0 | 0.2 7 | 0 | 0 | 0.0 18 | 0.0 3 | 0 | 16 | 43 | 15 |
| F | 0.01 5 | 0.2 1 | 1.4 3 | 0.01 4 | 0.00 2 | 0.0 35 | 0 | 0 | 0 | 0 | 0.0 12 | 0.0 3 | 0 | 21 | 38 | 17 |
| G | 0.19 | 0.3 2 | 0.7 5 | 0.01 3 | 0.00 1 | 0.0 4 | 0 | 0.0 2 | 0 | 0 | 0.0 16 | 0.0 3 | 0 | 25 | 35 | 10 |
| H | 0.08 | 0.4 2 | 1.1 | 0.01 1 | 0.00 3 | 0.0 24 | 0 | 0 | 0.4 8 | 0 | 0.0 12 | 0.0 4 | 0 | 13 | 32 | 5 |
| I | 0.07 9 | 0.2 5 | 1.3 | 0.01 6 | 0.00 4 | 0.0 3 | 0 | 0 | 0 | 0.0 7 | 0.0 1 | 0.0 4 | 0 | 1 | 50 | 13 |

**[Table 2]**

| Steel grade | Temperature (°C) | | | | |
|---|---|---|---|---|---|
| | Bs | Tnr | Ms | Ac3 | Ac1 |
| A | 562 | 984 | 437 | 795 | 703 |
| B | 584 | 935 | 444 | 796 | 699 |
| C | 612 | 952 | 448 | 790 | 703 |
| D | 569 | 927 | 424 | 774 | 714 |
| E | 604 | 948 | 439 | 776 | 706 |
| F | 697 | 933 | 489 | 823 | 714 |
| G | 711 | 972 | 436 | 782 | 724 |
| H | 676 | 923 | 466 | 822 | 732 |
| I | 686 | 988 | 466 | 800 | 716 |

The slabs having the compositions of Table 1 were subjected to rough rolling, first cooling and a heat recuperation treatment under the conditions of Table 3 below, and finish rolling and second cooling were performed under the conditions of Table 4. The evaluation results for the steels manufactured under the conditions of Tables 3 and 4 are shown in Table 5 below.

For each steel material, an average grain size of the surface layer, a high angle grain boundary fraction of the surface layer, mechanical properties, and an NDT temperature were measured. Among these, a region of 500m*500m was measured as a 0.5m step size by an EBSD method, a grain boundary map having a crystal orientation difference of 15 degrees or more with adjacent grains was created based on the measured step size, based on which an average grain size and high angle grain boundary fraction were evaluated. For yield strength (YS) and tensile strength (TS), three test pieces were subjected to a tensile strength test in a plate width direction and an average thereof was obtained and evaluated. The NDT temperature was evaluated by the NRL drop weight test specified in ASTM E208, a P-2 type (thickness: 19mm, width: 51mmm, length: 127mm) specimen was prepared, the specimen was fully immersed in a stirring thermostat to maintain a uniform temperature, and thereafter, the NRL drop weight test was performed.

**[Table 3]**

| Stee 1 grade | Classification | Reheating and rough rolling | | | | First cooling | Heat recuperation treatment | Remark |
|---|---|---|---|---|---|---|---|---|
| | | Thickness of slab before rough rolling (mm) | Reduction ratio of rough rolling (%) | Reheat extraction temperature (°C) | Rough rolling end temperature (°C) | Cooling end temperature (°C) | Heat recuperation treatment arrival surface temperature (°C) | |
| A | A-1 | 244 | 40 | 1070 | 1000 | 559 | 773 | Recommen ded conditio n |
| | A-2 | 244 | 39 | 1085 | 990 | 549 | 763 | Recommen ded conditio n |
| | A-3 | 220 | 32 | 1110 | 1040 | 551 | 779 | Recommen ded conditio n |
| | A-4 | 244 | 23 | 1110 | 1070 | 629 | 843 | Higher than heat recupera tion treatmen t temperat ure |
| | A-5 | 220 | 36 | 1110 | 950 | 461 | 689 | Lower than heat recupera tion treatmen t temperat ure |
| | A-6 | 220 | 26 | 1050 | 1020 | 531 | 759 | Recommen ded conditio n |
| B | B-1 | 244 | 33 | 1080 | 1000 | 559 | 773 | Recommen ded conditio n |
| | B-2 | 244 | 33 | 1080 | 1000 | 559 | 773 | Recommen ded conditio n |
| | B-3 | 220 | 27 | 1100 | 1040 | 551 | 779 | Recommen ded conditio n |
| | B-4 | 244 | 22 | 1100 | 1080 | 639 | 853 | Higher than heat recupera tion treatmen t temperat ure |
| | B-5 | 220 | 30 | 1080 | 950 | 461 | 689 | Lower than heat recupera tion treatment temperat ure |
| C | C-1 | 244 | 25 | 1090 | 1000 | 559 | 773 | Recommen ded conditio n |
| | C-2 | 244 | 33 | 1070 | 990 | 549 | 763 | Recommen ded conditio n |
| | C-3 | 244 | 23 | 1110 | 1085 | 644 | 858 | Higher than heat recupera tion treatmen t temperat ure |
| | C-4 | 220 | 41 | 1070 | 980 | 491 | 719 | Lower than heat recupera tion treatmen t temperat ure |
| | C-5 | 220 | 23 | 1070 | 1020 | 531 | 759 | Recommen ded condition |
| D | D-1 | 244 | 33 | 1065 | 985 | 544 | 758 | Recommen ded conditio n |
| | D-2 | 244 | 33 | 1070 | 990 | 549 | 763 | Recommen ded conditio n |
| | D-3 | 244 | 25 | 1100 | 1040 | 599 | 813 | Higher than heat recupera tion treatmen t temperat ure |
| | D-4 | 220 | 23 | 1020 | 970 | 481 | 709 | Lower than heat recupera tion treatmen t temperat ure |
| E | E-1 | 244 | 33 | 1060 | 980 | 539 | 753 | Recommen ded conditio n |
| | E-2 | 244 | 35 | 1075 | 990 | 549 | 763 | Recommended conditio n |
| | E-3 | 244 | 49 | 1110 | 990 | 549 | 763 | Recommen ded conditio n |
| F | F-1 | 244 | 37 | 1090 | 1000 | 559 | 773 | Recommen ded conditio n |
| G | G-1 | 244 | 37 | 1090 | 1000 | 559 | 773 | Recommen ded conditio n |
| H | H-1 | 244 | 31 | 1080 | 1005 | 564 | 778 | Recommen ded conditio n |
| I | I-1 | 244 | 37 | 1080 | 990 | 549 | 763 | Recommen ded conditio n |

**[Table 4]**

| Stee 1 grad e | Clas sifi cati on | Finish rolling | | Second cooling | | Remark |
|---|---|---|---|---|---|---|
| | | Rolling start tempera ture (°C) | Rolling end tempera ture (°C) | Cooling rate (°C/sec ) | Cooling end tempera ture (°C) | |
| A | A-1 | 900 | 860 | 15.0 | 250 | Recommended condition |
| | A-2 | 900 | 860 | 10.0 | 350 | Recommended condition |
| | A-3 | 930 | 890 | 7.0 | 350 | Recommended condition |
| | A-4 | 970 | 930 | 8.0 | 390 | Recommended condition |
| | A-5 | 850 | 810 | 7.0 | 390 | Recommended condition |
| | A-6 | 900 | 860 | 8.0 | 600 | Cooling end temperature high temperature |
| B | B-1 | 900 | 860 | 15.0 | 260 | Recommended condition |
| | B-2 | 900 | 860 | 20.0 | 350 | Recommended condition |
| | B-3 | 920 | 880 | 15.0 | 280 | Recommended condition |
| | B-4 | 930 | 890 | 20.0 | 300 | Recommended condition |
| | B-5 | 880 | 840 | 8.0 | 400 | Recommended condition |
| C | C-1 | 900 | 860 | 10.0 | 280 | Recommended condition |
| | C-2 | 880 | 840 | 25.0 | 330 | Recommended condition |
| | C-3 | 950 | 910 | 10.0 | 400 | Recommended condition |
| | C-4 | 870 | 830 | 8.0 | 400 | Recommended condition |
| | C-5 | 910 | 870 | 10.0 | 550 | Cooling end temperature high temperature |
| D | D-1 | 900 | 860 | 15.0 | 270 | Recommended condition |
| | D-2 | 890 | 850 | 15.0 | 350 | Recommended condition |
| | D-3 | 850 | 810 | 10.0 | 400 | Recommended condition |
| | D-4 | 860 | 820 | 10.0 | 250 | Recommended condition |
| E | E-1 | 910 | 870 | 15.0 | 250 | Recommended condition |
| | E-2 | 890 | 850 | 20.0 | 400 | Recommended condition |
| | E-3 | 890 | 850 | 3.0 | 490 | Lower cooling rate |
| F | F-1 | 900 | 860 | 10.0 | 370 | Recommended condition |
| G | G-1 | 890 | 850 | 10.0 | 370 | Recommended condition |
| H | H-1 | 910 | 870 | 10.0 | 370 | Recommended condition |
| I | I-1 | 890 | 850 | 10.0 | 370 | Recommended condition |

**[Table 5]**

| Stee 1 grad e | Clas sifi cati on | Produ ct thick ness (mm) | surface | | Physical properties | | | |
|---|---|---|---|---|---|---|---|---|
| | | | Thickn ess of surfac es layer portio n (mm) | Averag e grain size (um) | YS (MPa) | TS (MPa) | High angle grain bounda ry fracti on (%) | NDT (°C) |
| A | A-1 | 75 | 3 | 1.9 | 725 | 865 | 48 | -75 |
| | A-2 | 25 | 1 | 1.8 | 764 | 899 | 47 | -75 |
| | A-3 | 50 | 2 | 1.8 | 731 | 875 | 49 | -75 |
| | A-4 | 60 | 0 | 10.0 | 739 | 876 | 37 | -30 |
| | A-5 | 30 | 0 | 6.5 | 750 | 890 | 42 | -50 |
| | A-6 | 65 | 2 | 2.5 | 672 | 780 | 47 | -70 |
| B | B-1 | 80 | 3 | 2.2 | 710 | 825 | 48 | -80 |
| | B-2 | 35 | 1 | 2.6 | 718 | 869 | 48 | -75 |
| | B-3 | 50 | 2 | 2.1 | 715 | 868 | 49 | -80 |
| | B-4 | 30 | 0 | 9.9 | 712 | 851 | 37 | -30 |
| | B-5 | 70 | 0 | 5.5 | 740 | 869 | 42 | -50 |
| C | C-1 | 85 | 3 | 2.0 | 712 | 881 | 49 | -90 |
| | C-2 | 25 | 1 | 2.0 | 738 | 892 | 47 | -95 |
| | C-3 | 65 | 0 | 11.2 | 716 | 861 | 36 | -30 |
| | C-4 | 25 | 0 | 4.5 | 730 | 891 | 43 | -50 |
| | C-5 | 40 | 2 | 1.8 | 635 | 792 | 47 | -95 |
| D | D-1 | 55 | 2 | 2.1 | 712 | 860 | 48 | -70 |
| | D-2 | 25 | 1 | 2.5 | 726 | 865 | 49 | -70 |
| | D-3 | 50 | 0 | 10.3 | 706 | 858 | 37 | -35 |
| | D-4 | 35 | 0 | 5.4 | 723 | 863 | 42 | -50 |
| E | E-1 | 65 | 2 | 2.1 | 718 | 854 | 47 | -75 |
| | E-2 | 20 | 1 | 2.0 | 715 | 834 | 49 | -95 |
| | E-3 | 50 | 2 | 2.0 | 665 | 795 | 49 | -75 |
| F | F-1 | 70 | 2 | 2.2 | 347 | 463 | 46 | -80 |
| G | G-1 | 55 | 1 | 2.5 | 342 | 546 | 49 | -85 |
| H | H-1 | 50 | 1 | 2.4 | 495 | 608 | 46 | -80 |
| I | I-1 | 65 | 2 | 2.6 | 435 | 561 | 46 | -90 |

Steel grades A, B, C, D and E are steels satisfying the alloy composition of the present invention. Among them, it can be seen that, in A-1, A-2, A-3, B-1, B-2, B-3, C-1, C-2, D-1, D-2, E-1, and E-2 satisfying process conditions for those parameters that were determined, a high angle grain boundary fraction of a surface layer portion is 45% or more and an average grain size of the surface layer portion has a certain level or higher, and an NDT temperature is -70°C or lower. Since not all process parameters were determined, these Examples cannot be considered Inventive.

In the case of A-4, B-4, C-3, and D-3 in which the alloy composition of the present invention is satisfied but the heat recuperation treatment temperature exceeds the range of the present invention, it can be seen that the high angle grain boundary fraction of the surface layer portion is 45% Is less and the average grain size of the surface layer portion exceeds 3 um, and the NDT temperature exceeds -70°C. This is because the surface layer portion of the steel was heated to a temperature higher than a two-phase region heat treatment temperature section, a structure of the surface layer portion was entirely reversely transformed to austenite, and as a result, a final structure of the surface layer portion was formed as lath bainite.

In the case of A-5, B-5, C-4, and D-4 in which the alloy composition of the present invention is satisfied but a heat recuperation treatment temperature is less than the range of the present invention, it can be seen that the high angle grain boundary fraction of the surface layer portion is 45% or less, the average grain size of the surface layer portion exceeds 3 um, and the NDT temperature exceeds -70°C. This is because the surface layer portion of the steel was excessively cooled during the first cooling, so reversed austenite was not sufficiently formed in the surface layer portion.

In the case of A-6 and C-5 in which the alloy composition of the present invention is satisfied but a cooling end temperature of the second cooling exceeds the range of the present invention or in the case of E-3 in which the cooling rate of the second cooling does not fall within the range of the present invention, it can be seen that tensile strength is relatively low. In addition, as a result of observing a microstructure of a central portion of each specimen, in the case of A-1, A-2, A-3, B-1, B-2, B-3, C-1, C-2, D-1, D-2, E-1, and E-2 satisfying the alloy composition and the process conditions of the present invention, it can be seen that bainitic ferrite was formed in the central portion, whereas in the case of A-6, C-5. and E-3, it can be seen that granular ferrite was formed as a matrix structure. That is, it can be seen that, in order to secure the intended high strength characteristics of the present invention, it is effective to form the matrix structure of the central portion as bainitic ferrite.

In the case of F-1. G-1, H-1, and I-1 not satisfying the alloy composition of the present invention, it can be seen that the tensile strength is relatively low even though the process conditions of the present invention are satisfied, and the high strength characteristics intended in the present invention are not secured.

Therefore, in the case of the examples satisfying the alloy composition and process conditions of the present invention, it can be seen that high strength characteristics and brittle fracture resistance can be effectively secured by securing the high strength characteristics and the NDT temperature of -70°C or lower.

While example embodiments have been shown and described above, it will be apparent to those skilled in the art that modifications and variations could be made without departing from the scope of the present invention as defined by the appended claims.

## Claims

1. A structural steel having excellent brittle fracture resistance, the structural steel comprising, by wt%, 0.02% to 0.12% of carbon (C), 0.01% to 0.8% of silicon (Si), 1.5% to 2.5% of manganese (Mn), 0.005% to 0.5% of aluminum (Al) , 0.02% or less of phosphorus (P), 0.01% or less of sulfur (S), 0.0015% to 0.015% of nitrogen (N), optionally further comprising one or more selected from the group consisting of, by weight%, 0.01% to 2.0% of nickel (Ni), 0.01% to 1.0% of copper (Cu), 0.01% to 1.0% of chromium (Cr), 0.01% to 1.0% of molybdenum (Mo), 0.005% to 0.1% of titanium (Ti), 0.005% to 0.1% of niobium (Nb), 0.005% to 0.3% of vanadium (V), 0.0005% to 0.004% of boron (B), and 0.006% or less of calcium (Ca), and the balance of Fe and other inevitable impurities,
wherein an outer surface layer portion and an inner central portion are microstructurally distinguished from each other in a thickness direction, the surface layer portion comprises a tempered bainite as a matrix structure, the central portion comprises bainitic ferrite as a matrix structure, and
wherein the surface layer portion further comprises fresh martensite as a second structure, and the surface layer portion comprises the tempered bainite and the fresh martensite in a fraction of 95 area% or more, and
wherein the central portion comprises the bainitic ferrite in a fraction of 95 area% or more, and
wherein the surface layer portion comprises an upper surface layer portion in an upper portion of the steel and a lower surface layer portion in a lower portion of the steel, and the upper surface layer portion and the lower surface layer portion each have a thickness of 3% to 10% of a thickness of the steel, and
wherein an average grain size of the surface layer portion is 3 µm or less, excluding 0 µm, and
wherein a high angle grain boundary fraction of the surface layer portion is 45% or more, and a nil ductility transition (NDT) temperature based on naval research lab, NRL, drop weight test is -70°C or lower and a tensile strength exceeds 780 MPa, and whereby the grain sizes are determined according to the description.

2. The structural steel of claim 1, wherein the surface layer portion further comprises austenite as a residual structure, and the surface layer portion comprises the austenite in a fraction of 5 area% or less.

3. The structural steel of claim 1, wherein an average grain size of the central portion is 5 µm to 20 µm.

4. A method for manufacturing a structural steel, according to claim 1, having excellent brittle fracture resistance, the method comprising:
re-heating a slab comprising, by wt%, 0.02% to 0.12% of carbon (C), 0.01% to 0.8% of silicon (Si), 1.5% to 2.5% of manganese (Mn), 0.005% to 0.5% of aluminum (Al) , 0.02% or less of phosphorus (P), 0.01% or less of sulfur (S), 0.0015% to 0.015% of nitrogen (N), optionally further comprising one or more selected from the group consisting of, by weight%, 0.01% to 2.0% of nickel (Ni), 0.01% to 1.0% of copper (Cu), 0.01% to 1.0% of chromium (Cr), 0.01% to 1.0% of molybdenum (Mo), 0.005% to 0.1% of titanium (Ti), 0.005% to 0.1% of niobium (Nb), 0.005% to 0.3% of vanadium (V), 0.0005% to 0.004% of boron (B), and 0.006% or less of calcium (Ca), and the balance of Fe and other inevitable impurities in a temperature range of 1050°C to 1250°C;
rough-rolling the slab in a temperature range of Tnr to 1150°C to provide a rough-rolled bar;
first cooling the rough-rolled bar at a cooling rate of 5°C/s or higher, such that a surface layer portion thereof is cooled to a temperature range of Ms to Bs°C;
maintaining the first cooled rough-rolled bar such that a surface layer portion thereof is reheated to a temperature range of (Ac1+40°C)~(Ac3-5°C) by heat recuperation;
finish rolling the recuperated rough-rolled bar; and
secondary cooling the finish rolled steel to a temperature range of 200°C to 500°C at a cooling rate of 5°C/s or higher, and
wherein the first cooling is initiated at a temperature of Ae3+100°C or lower based on a temperature of a surface layer portion of the rough-rolled bar.

5. The method of claim 4, wherein the rough-rolled bar is finish-rolled in a temperature range of Bs to Tnr°C.

## Patentansprüche

1. Baustahl mit ausgezeichneter Sprödbruchfestigkeit, wobei der Baustahl in Gew.-% 0,02 % bis 0,12 % Kohlenstoff (C), 0,01 % bis 0,8 % Silicium (Si), 1,5 % bis 2,5 % Mangan (Mn), 0,005 % bis 0,5 % Aluminium (Al), 0,02 % oder weniger Phosphor (P), 0,01 % oder weniger Schwefel (S), 0,0015 % bis 0,015 % Stickstoff (N) umfasst und optional ferner eines oder mehrere, ausgewählt aus der Gruppe bestehend aus, in Gew.-%, 0,01 % bis 2,0 % Nickel (Ni), 0,01 % bis 1,0 % Kupfer (Cu), 0,01 % bis 1,0 % Chrom (Cr), 0,01 % bis 1,0 % Molybdän (Mo), 0,005 % bis 0,1 % Titan (Ti), 0,005 % bis 0,1 % Niob (Nb), 0,005 % bis 0,3 % Vanadium (V), 0,0005 % bis 0,004 % Bor (B) und 0,006 % oder weniger Calcium (Ca), umfasst und der Rest Fe und andere unvermeidbare Verunreinigungen sind,
wobei sich ein äußerer Oberflächenschichtteil und ein innerer Mittelteil in Dickenrichtung mikrostrukturell voneinander unterscheiden, der Oberflächenschichtteil einen getemperten Bainit als Matrixstruktur umfasst, der Mittelteil bainitischen Ferrit als Matrixstruktur umfasst, und
wobei der Oberflächenschichtteil ferner frischen Martensit als ein Sekundärgefüge umfasst, und der Oberflächenschichtteil den getemperten Bainit und den frischen Martensit in einem Anteil von 95 Flächen-% oder mehr umfasst, und
wobei der Mittelteil den bainitischen Ferrit in einem Anteil von 95 Flächen-% oder mehr umfasst, und
wobei der Oberflächenschichtteil einen oberen Oberflächenschichtteil in einem oberen Teil des Stahls und einen unteren Oberflächenschichtteil in einem unteren Teil des Stahls umfasst, und der obere Oberflächenschichtteil und der untere Oberflächenschichtteil jeweils eine Dicke von 3 % bis 10 % einer Dicke des Stahls aufweisen, und
wobei eine durchschnittliche Korngröße des Oberflächenschichtteils 3 µm oder weniger beträgt, ausgenommen 0 µm, und
wobei ein Großwinkelkorngrenzenanteil des Oberflächenschichtteils 45 % oder mehr beträgt und eine Null-Zähigkeit-Übergangstemperatur (NDT-Temperatur), basierend auf dem Fallgewichtstest des US-Marineforschungslabors (NRL), -70 °C oder weniger beträgt und eine Zugfestigkeit 780 MPa überschreitet und wobei die Korngrößen gemäß der Beschreibung bestimmt werden.

2. Baustahl nach Anspruch 1, wobei der Oberflächenschichtteil ferner Austenit als ein Restgefüge umfasst und der Oberflächenschichtteil den Austenit in einem Anteil von 5 Flächen-% oder weniger umfasst.

3. Baustahl nach Anspruch 1, wobei die durchschnittliche Korngröße des Mittelteils 5 µm bis 20 µm beträgt.

4. Verfahren zur Herstellung eines Baustahls nach Anspruch 1, der eine ausgezeichnete Sprödbruchfestigkeit aufweist, wobei das Verfahren umfasst:
Wiedererwärmen einer Bramme, die in Gew.-% 0,02 % bis 0,12 % Kohlenstoff (C), 0,01 % bis 0,8 % Silicium (Si), 1,5 % bis 2,5 % Mangan (Mn), 0,005 % bis 0,5 % Aluminium (Al), 0,02 % oder weniger Phosphor (P), 0,01 % oder weniger Schwefel (S), 0,0015 % bis 0,015 % Stickstoff (N) umfasst und optional ferner eines oder mehrere, ausgewählt aus der Gruppe bestehend aus, in Gew.-%, 0,01 % bis 2,0 % Nickel (Ni), 0,01 % bis 1,0 % Kupfer (Cu), 0,01 % bis 1,0 % Chrom (Cr), 0,01 % bis 1,0 % Molybdän (Mo), 0,005 % bis 0,1 % Titan (Ti), 0,005 % bis 0,1 % Niob (Nb), 0,005 % bis 0,3 % Vanadium (V), 0,0005 % bis 0,004 % Bor (B) und 0,006 % oder weniger Calcium (Ca), umfasst, wobei der Rest Fe und andere unvermeidbare Verunreinigungen sind, in einem Temperaturbereich von 1050 °C bis 1250 °C;
Vorwalzen der Bramme in einem Temperaturbereich von Tnr bis 1150 °C, um einen vorgewalzten Stab zu erhalten;
erstmaliges Abkühlen des vorgewalzten Stabes mit einer Abkühlgeschwindigkeit von 5 °C/s oder mehr, so dass ein Oberflächenschichtteil davon auf einen Temperaturbereich von Ms bis Bs °C abgekühlt wird;
Beibehalten des erstmalig gekühlten vorgewalzten Stabes, so dass ein Oberflächenschichtteil desselben durch Wärmerekuperation auf einen Temperaturbereich von (Ac1+40 °C)-(Ac3-5 °C) wiedererwärmt wird;
Fertigwalzen des rekuperierten vorgewalzten Stabes; und
sekundäres Abkühlen des fertiggewalzten Stahls auf einen Temperaturbereich von 200 °C bis 500 °C mit einer Abkühlgeschwindigkeit von 5 °C/s oder mehr, und
wobei das erstmalige Abkühlen bei einer Temperatur von Ae3+100 °C oder darunter, basierend auf einer Temperatur eines Oberflächenschichtteils des vorgewalzten Stabes, eingeleitet wird.

5. Verfahren nach Anspruch 4, wobei der vorgewalzte Stab in einem Temperaturbereich von Bs bis Tnr °C fertiggewalzt wird.

## Revendications

1. Acier de construction présentant une excellente résistance à la rupture fragile, l'acier de construction comprenant, en % en poids, 0,02 % à 0,12 % de carbone (C), 0,01 % à 0,8 % de silicium (Si), 1,5 % à 2,5 % de manganèse (Mn), 0,005 % à 0,5 % d'aluminium (Al), 0,02 % ou moins de phosphore (P), 0,01 % ou moins de soufre (S), 0,0015 % à 0,015 % d'azote (N), comprenant en outre facultativement en un ou plusieurs éléments choisis dans le groupe consistant en, en % en poids, 0,01 % à 2,0 % de nickel (Ni), 0,01 % à 1,0 % de cuivre (Cu), 0,01 % à 1,0 % de chrome (Cr), 0,01 % à 1,0 % de molybdène (Mo), 0,005 % à 0,1 % de titane (Ti), 0,005 % à 0,1 % de niobium (Nb), 0,005 % à 0,3 % de vanadium (V), 0,0005 % à 0,004 % de bore (B), et 0,006 % ou moins de calcium (Ca), et le reste de Fe et d'autres impuretés inévitables,
dans lequel une portion de couche de surface externe et une portion centrale interne sont microstructuralement distinctes l'une de l'autre dans une direction d'épaisseur, la portion de couche de surface comprend une bainite revenue comme structure de matrice, la portion centrale comprend de la ferrite bainitique comme structure de matrice, et
dans lequel la portion de couche de surface comprend en outre de la martensite fraîche comme seconde structure, et la portion de couche de surface comprend la bainite revenue et la martensite fraîche dans une fraction de 95 % d'aire ou plus, et
dans lequel la portion centrale comprend la ferrite bainitique dans une fraction de 95 % d'aire ou plus, et dans lequel la portion de couche de surface comprend une portion de couche de surface supérieure dans une portion supérieure de l'acier et une portion de couche de surface inférieure dans une portion inférieure de l'acier, et la portion de couche de surface supérieure et la portion de couche de surface inférieure ont chacune une épaisseur de 3 % à 10 % d'une épaisseur de l'acier, et
dans lequel une taille moyenne de grain de la portion de couche de surface est de 3 µm ou moins, à l'exclusion de 0 µm, et
dans lequel une fraction de joint de grains à angle élevé de la portion de couche de surface est de 45 % ou plus, et une température de transition de ductilité nulle (NDT) basée sur un essai par chute d'un poids du Laboratoire de recherche navale, NRL, est de -70 °C ou moins et une résistance à la traction dépasse 780 MPa, moyennant quoi les tailles de grain sont déterminées selon la description.

2. Acier de construction selon la revendication 1, dans lequel la portion de couche de surface comprend en outre de l'austénite comme structure résiduelle, et la portion de couche de surface comprend l'austénite dans une fraction de 5 % d'aire ou moins.

3. Acier de construction selon la revendication 1, dans lequel une taille moyenne de grain de la portion centrale est de 5 µm à 20 µm.

4. Procédé de fabrication d'un acier de construction, selon la revendication 1, présentant une excellente résistance à la rupture fragile, le procédé comprenant :
le réchauffage d'une brame comprenant, en % en poids, 0,02 % à 0,12 % de carbone (C), 0,01 % à 0,8 % de silicium (Si), 1,5 % à 2,5 % de manganèse (Mn), 0,005 % à 0,5 % d'aluminium (Al), 0,02 % ou moins de phosphore (P), 0,01 % ou moins de soufre (S), 0,0015 % à 0,015 % d'azote (N), comprenant en outre facultativement un ou plusieurs éléments choisis dans le groupe consistant en, en % en poids, 0,01 % à 2,0 % de nickel (Ni), 0,01 % à 1,0 % de cuivre (Cu), 0,01 % à 1,0 % de chrome (Cr), 0,01 % à 1,0 % de molybdène (Mo), 0,005 % à 0,1 % de titane (Ti), 0,005 % à 0,1 % de niobium (Nb), 0,005 % à 0,3 % de vanadium (V), 0,0005 % à 0,004 % de bore (B), et 0,006 % ou moins de calcium (Ca), et le reste de Fe et d'autres impuretés inévitables dans une plage de températures de 1050 °C à 1250 °C ;
le laminage brut de la brame dans une plage de températures de Tnr à 1150 °C pour fournir une barre brute laminée ;
le premier refroidissement de la barre brute laminée à une vitesse de refroidissement de 5 °C/s ou plus, de sorte que la portion de couche de surface de celle-ci est refroidie jusqu'à une plage de températures de Ms à Bs °C ;
le maintien de la barre brute laminée ayant subi un premier refroidissement de sorte qu'une portion de couche de surface de celle-ci est réchauffée jusqu'à une plage de températures de (Ac1 + 40 °C) - (Ac3 - 5 °C) par récupération de chaleur ;
le laminage de finition de la barre brute laminée récupérée ; et
le refroidissement secondaire de l'acier ayant subi un laminage de finition jusqu'à une plage de températures de 200 °C à 500 °C à une vitesse de refroidissement de 5 °C/s ou plus, et
dans lequel le premier refroidissement est initié à une température de Ae3 + 100 °C ou moins sur la base d'une température d'une portion de couche de surface de la barre brute laminée.

5. Procédé selon la revendication 4, dans lequel la barre brute laminée subit un laminage de finition dans une plage de températures de Bs à Tnr °C.
